# EUROPEAN PATENT SPECIFICATION

(11) **EP 4 068 639 B1**
(45) Date of publication and mention of the grant of the patent: **11.10.2023**
(21) Application number: 21382274.5
(22) Date of filing: 31.03.2021
(51) Int. Cl.: H04B 3/54

(54) **METHOD FOR NOISE REDUCTION IN POWER LINE COMMUNICATION (PLC) SYSTEMS**
VERFAHREN ZUR RAUSCHREDUZIERUNG IN SYSTEM ZUR STROMLEITUNGSKOMMUNIKATION (PLC)
PROCÉDÉ DE RÉDUCTION DU BRUIT DANS DES SYSTÈMES DE COMMUNICATION PAR COURANTS PORTEURS EN LIGNE (PLC)

(43) Date of publication of application: 05.10.2022
(73) Proprietor: Iberdrola QSTP LLC, Doha (QA)
(72) Inventor: HERNÁNDEZ FERNÁNDEZ, Javier, 28224 Pozuelo de Alarcón (Madrid) (ES); AYMEN OMRI, Elhadadya, Bizerte (TN)
(74) Representative: Pons

(56) References cited:
- EP-A2- 2 629 474
- SIMONE RAPONI ET AL: "Large-Scale Noise Characterization of Narrowband Power Line Communications", ARXIV.ORG, CORNELL UNIVERSITY LIBRARY, 201 OLIN LIBRARY CORNELL UNIVERSITY ITHACA, NY 14853, 31 July 2020 (2020-07-31), XP081730074,

## Description

### OBJECT OF THE INVENTION

The invention is referred to the field of power line communication (PLC), in particular, the invention is related to a noise reduction method for orthogonal frequency-division multiplexing (OFDM) based PLC.

The object of the invention is a low-complexity method for noise reduction in PLC systems.

### BACKGROUND ART

Power line communication (PLC) is a viable and cost-efficient solution for smart-grid applications due to its capacity to transmit two-way data over existing electrical wires.

However, PLC suffers from high unpredictable noise levels categorized into three types:
- Colored Background Noise: Produced by multiple noise sources of low power spectral density (PSD) that decreases with the used frequency.
- Narrowband Noise: It consists of sinusoidal signals mainly generated by electric devices and broadcast radio stations.
- Impulsive Noise: It results from electrical appliances plugged into the power line network. It consists of three types of noise:
   1) Periodic Synchronous Impulsive Noise: Produced by the rectifier diodes in power supplies (e.g., power converters) that operate synchronously with the main power-line frequency. The repetition rate of these impulses is 50 or 100 Hz, with a duration of the order of microseconds. Like the background noise, the PSD of the periodic synchronous impulsive noise decreases with the used frequency.
   2) Periodic Asynchronous Impulsive Noise: Consisting of impulses, with a repetition rate between 50 kHz and 200 kHz, which is generated by the switching of power supplies on the network and AC/DC power converters.
   3) Asynchronous Impulsive Noise: Resulting from switching transients in the network. These impulses occur arbitrarily and with a high amplitude, with a duration between a few microseconds and a few milliseconds. It is considered to be the major impairment to PLC networks.

The negative impact of these PLC noises on the signal-to-noise ratio (SNR) can be too severe to be mitigated by channel encoding techniques, e.g., forward error correction (FEC) and interleaving. As a result, proposing noise reduction schemes is of high importance to prevent PLC systems' performance degradation.

Some works in the literature propose different techniques to estimate and reduce PLC noise. Based on the processing domain, these techniques can be classified into the following three categories:

### 1) Time Domain Processing Techniques:

Some studies have proposed and analyzed an adaptive nonlinear analog front-end filter that detects and mitigates impulsive noise. The proposed filter is based on an adaptive canonical differential limiter (ACDL), which is constructed from a clipped mean tracking filter (CMTF) and quartile tracking filters (QTFs).

Based on the knowledge of the cyclostationarity of the narrowband and periodic impulsive PLC noise, other solutions propose a noise cancellation technique that is based on the "narrowband regression" (NBR) and the "multiple cyclic regression" (MCR) methods.

Other solutions use a compressed sensing technique to propose a new impulsive noise mitigation method. This technique exploits the null-subcarriers in an OFDM-based PLC system, and the burst structure of impulsive noise to detect the location and the values of the received impulsive noise samples at the time domain.

The compressed sensing technique has also been used to propose different algorithms that cancel out sufficiently sparse impulse noise.

Other works presented an adaptive clipping threshold and compressive sensing method to detect impulsive noise positions. In addition, the minimum mean square error (MMSE) estimator is adopted to estimate the amplitude of impulsive noise based on the estimated locations.

In other works, Luby transform (LT) codes have been used to propose an algorithm that estimates the impulsive noise burst time occurrence and its duration and then subtract it from the received signal.

Other studies have proposed methods to avoid the significant impact of the impulsive noise on PLC systems by processing the idle carriers' information. Specifically, regulation authorities have restricted the use of PLC at specific frequencies to avoid this interference with some radio services, including amateur bands. By using the received information via these idle carriers at a PLC receiver, a method has been proposed to detect and subtract the impulsive noises. First, a "calculate threshold" and a "detect exceeding samples" blocks have been proposed to detect the position and the duration of significant impulsive noises that exceed a specific threshold in the time domain. Then, the idle carriers' samples should be extracted, where no information has been transmitted. After that, by using the affected samples' locations by the impulsive noise, and with the idle carriers samples at the receiver, a proposed "Calculate canceling sequence" has been designed to output an estimation of the impulsive noise complex samples in the time domain. Finally, these estimated samples can be subtracted from the original desired signal at the time domain to prevent the negative impact of the impulsive noise on PLC performance.

In other works, the sparsity of the asynchronous impulsive noise and the periodicity of some impulsive noise has been exploited, in the time domain, to propose sparse Bayesian learning methods that estimate and subtract the noise impulses. These techniques do not require a statistical noise model to be trained. However, they are based on three iterative algorithms that utilize information either on the known subcarriers, such as null tones and pilots, to cancel out impulsive noise or on all sub-carriers to perform joint estimation-detection of impulse noise and data symbols. To enhance the noise estimation accuracy, a decision feedback from the decoder has also been used that is embedded in a time-domain block interleaving OFDM system.

### 2) Frequency Domain Processing Techniques:

A popular frequency domain technique consists of using some channel coding to avoid the impact of impulsive noise. In some works, the transmit pilot tones for synchronization and channel estimation purposes have been used as syndromes, with Reed-Solomon codes and a frequency algebraic interpolation technique, to avoid the impact of PLC noise on the received signal.

Another scheme has been proposed to tackle the same problem by using Bose-Chaudhuri-Hocquengem (BCH) code and a frequency algebraic interpolation technique. However, it is known that the background noise has a significant negative impact on the algebraic techniques, which presents a limitation to the proposed scheme.

### 3) Time-Frequency Domain Processing Techniques:

To simultaneously avoid the impulsive and narrowband noise for an OFDM-based PLC system, other authors have used a multiple signal characterization (MUSIC) algorithm to estimate both the time domain's impulsive noise locations and the frequency of narrowband noise in the frequency domain. Furthermore, a minimum mean square error (MMSE) estimator has been used to estimate the amplitude and the phase of impulsive noise location samples at the estimated locations, and a least-square (LS) technique has been used to estimate the narrow band noise's amplitude phase. Finally, the estimated impulsive noise and narrowband noise are subtracted from the received signal.

Other approaches have used an adaptive infinite impulse response (IIR) notch filter to remove the periodic impulsive noise that affects an OFDM-based PLC systems. To enhance the method's performance, a concatenated Reed Solomon-Convolutional coding and Turbo coding have been adopted as channel coding techniques.

Other authors have proposed new methods to detect the position of the impulsive noise in the received signal to erase the affected samples. Then, the receiver processes the output signal to overcome the missing deleted samples. However, the proposed scheme is limited by the complexity of detecting the exact position of the impulse and the unpredictable PLC noise levels.

The aforementioned schemes also require a high-performance digital signal processor to run the algorithms, which generally is not available in most PLC devices. The document "Large-Scale Noise Characterization of Narrowband Power Line Communications" Simone Raponi et al. Arxiv.org, Cornell University Library, 201 Olin Library; Cornell University Ithaca, NY 14853, 31 July 2020 (2020-07-31), XP081730074, discloses a noise modeling in power line communications having into account long-term noise phenomena in the reliability of the communication link, so as to maximize transfer rates in higher layers. The document explains large-scale noise characterization for narrowband power line communications and provides a statistical analysis of the long-term trends of power noise. Also, a statistical description of the noise process in the large-scale time domain based on real field measurements in the FCC band (10 KHz - 490 KHz) is included. Finally, the presence of time series correlations (up to 30 s) is highlighted and the noise level variation is modeled according to a t-location scale distribution.

The document EP2629474A2 discloses a data transmission system and method for transmitting data signal to one or receiving locations. The document discloses a Multi Mode Compressive Sensing (MMCS) scheme for improving overall transmission system data. The scheme adaptively changes the number of zero-subcarriers used to reconstruct an Impulsive Noise (IN) in an Orthogonal Frequency Division Multiplexing (OFDM) based data communication system depending on the Impulsive Noise's current severity so as to mitigate the effect of said Impulsive Noise and stabilize the Bit Error Rate (BER) of the transmitted data signals.

### DESCRIPTION OF THE INVENTION

The present invention is defined by the attached independent claims.

Other preferred embodiments may be found in the dependent claims.

The present invention discloses a novel low-complexity noise reduction method for power line communication (PLC) systems. The invention exploits a positive time-correlation between the sub-carrier's noise magnitudes and phases.

The method provides at least one pilot subcarrier and at least a set of subcarriers associated with the pilot subcarrier. The method uses pilot resource elements (REs) related to the identified pilot sub-carriers to detect the corresponding noise levels and estimate different data resource elements (REs). A RE is one sub-carrier spacing in frequency-domain by one OFDM symbol in time-domain. The modulated data symbols (to be transmitted) can be allocated to the data REs. However, the pilot REs remains always silent to detect the corresponding noise levels for the noise estimation at the PLC receiver.

The pilot RE is allocated to all subcarriers of the first OFDM symbol during an estimation period and to the subcarrier at the middle of the corresponding channel bandwidth for all OFDM symbols. The frequency domain is divided in a number of subcarriers associated to a pilot subcarrier, defined as the pilot frequency spacing. The time domain is divided in estimation periods, which is a specific number of OFDM symbols that presents a pilot time spacing.

Data resource elements (REs) are provided in all subcarriers and OFDM symbols without a pilot RE for allocating modulated data symbols to said data resource elements.

Then, the noise magnitude and phase are estimated by means of the expressions: $‖ {\hat{n}}_{k . i} ‖ = {α}_{k} ‖ {\hat{n}}_{k . i - 1} ‖ + {β}_{k} \left(‖ {n}_{p , i} ‖-‖ {n}_{p , i - 1} ‖\right) + {λ}_{k}$ $φ \left({\hat{n}}_{k . i}\right) = α {′}_{k} {\hat{n}}_{k . i - 1} + β {′}_{k} \left({n}_{p , i}-{n}_{p , i - 1}\right) + λ {′}_{k}$

Wherein ∥*n̂*_{*k*.*i*}∥ and *ϕ*(*n̂*_{*k*.*i*}) are the magnitude and the phase of noise power at data subcarrier *k,* and the OFDM symbol *i,* ∥*n*_{*p*.*i*}∥ and *ϕ*(*n*_{*p*.*i*}) are the magnitude and phase of noise power at pilot subcarrier p, and the OFDM symbol *i*, being *p* = $⌊ N _ sc / 2 ⌋$, where *N_{sc}* is the number of subcarriers associated to a pilot subcarrier, *k* being the variable representing subcarriers from 1 to *N_{SC}*,and *i* being the variable representing the current OFDM symbol from 1 to *N_{OS}*, with *N_{OS}* is the total amount of OFDM symbols, and *αₖ, α'ₖ*, *βₖ, β'ₖ, λₖ* and *λ'ₖ* being optimization parameters.

A corrected value of OFDM symbols is calculated by filtering the received data at each data resource element (RE) by applying the expression: ${{y}_{k , l}}^{˜} = {y}_{k , i} - ‖ {\hat{n}}_{k . i} ‖ exp \left(j φ\left({\hat{n}}_{k , i}\right)\right)$

Wherein, *y_{k,i}* is the received value of OFDM symbol at subcarrier k, and the OFDM symbol *i*.

In an OFDM-based PLC system, the noise reduction method is performed on the receiver after FFT block.

As explained, a novel low complexity noise reduction method for OFDM-based PLC systems has been proposed. The method of the invention is simple and efficient as a noise reduction technique for PLC systems, with a significant noise cancellation percentage gain.

The method of the invention could also be evaluated by using at least one of:
- a general SNR (*γ*_{*k*,*s*}) of sub-carrier k at OFDM symbol s, which is defined by the expressions: ${γ}_{k , s} = \frac{{P}_{T} {H}_{k , s}}{{n}_{k , s}}$ ${h}_{k , s} = {\sum }_{i = 0}^{N - 1} {g}_{i} exp \left(-\left[{a}_{0}+{a}_{1}{f}_{k}^{{a}_{2}}+j\frac{2 {πf}_{k}}{{v}_{p}}\right]\right)$ wherein, *P_{T}* is the transmit power, *h_{k,s}* and *n_{k,s}* are, respectively, the channel gain and the noise of sub-carrier k at OFDM symbol s, *H_{k,s}* = ∥*h*_{*k*,*s*}∥², *N* is the number of the significant (non-negligible) paths, *gᵢ* is the coefficient of the path index *i, fₖ* is the frequency of sub-carrier index *k, vₚ* is the phase velocity in the transmission line, and *a*₀, *a*₁, and *a*₂ constant channel attenuation factors; and
- a normalized mean square error (NMSE) expressed as: $NMSE = \frac{\frac{1}{N} {\sum }_{n = 1}^{N} {\left|X\left[n\right]-\hat{X}\left[n\right]\right|}^{2}}{\frac{1}{N} {\sum }_{n = 1}^{N} {\left|X\left[n\right]\right|}^{2}} = \frac{{\sum }_{n = 1}^{N} \left|{Err}_{I}{\left[n\right]}^{2}-{Err}_{Q}{\left[n\right]}^{2}\right|}{{\sum }_{n = 1}^{N} \left|{X}_{I}{\left[n\right]}^{2}-{X}_{Q}{\left[n\right]}^{2}\right|}$ wherein, *X*[*n*] = *X_{R}*[*n*] + *i X_{I}*[*n*] is a given noise complex value, with *X_{R}*[*n*] and *X_{I}*[*n*] are the corresponding real and imaginary parts, and *X̂*[*n*] = *X̂_{R}*[*n*] + *i X̂_{I}*[n] is its estimated value. *Err_{R}*[*n*] = *X_{R}*[*n*] *- X̂_{R}*[*n*] and *Err_{I}*[*n*] = *X_{I}*[*n*] - *X̂_{I}*[*n*]*.*

The invention also refers to a computer program adapted to perform the steps of the method of the invention and a computer readable storage medium comprising said computer program.

### DESCRIPTION OF THE DRAWINGS

**Fig. 1****.** shows an OFDM-based PLC system, wherein the pilots insertion and noise reduction method are included.
**Fig. 2****.** shows the time-variation of noise magnitude of a pilot sub-carrier at 1373.3 Hz for the band pass signal of center frequency 64.94 kHz and some adjacent subcarriers.
**Fig. 3****.** shows the time-variation of noise phase of a pilot sub-carrier at 1373.3 Hz for the band pass signal of center frequency 64.94 kHz and some adjacent sub-carriers.
**Fig. 4A****.** shows the average time-correlation coefficients between the noise magnitudes for different locations.
**Fig. 4B****.** shows the average time-correlation coefficients between the noise phases for different locations.
**Fig. 5****.** shows the correlation coefficients between the noise magnitudes of some identified pilot frequencies/subcarriers (PFs) and that of the other sub-carriers within the same narrowband channel.
**Fig. 6****.** shows the correlation coefficients between the noise phases of some identified pilot frequencies/subcarriers (PFs) and that of the other sub-carriers within the same narrowband channel.
**Fig. 7****.** shows an OFDM-based PLC system, wherein the noise reduction method is included.
**Fig. 8****.** shows a diagram of scattering per channel of pilot resource elements (REs) and data resource elements (REs).
**Fig. 9****.** shows the relationship between estimated and real complex noise values.
**Fig. 10****.** shows an example of noise magnitude variation and its estimate for a subcarrier of 42kHz, at a customer house in a semi-dense urban area, for a period of a day
**Fig. 11****.** shows an example of noise phase variation and its estimate for a subcarrier of 42kHz, at a customer house in a semi-dense urban area, for a period of a day
**Fig. 12****.** shows the NMSE value for a sub-carrier and a channel.
**Fig. 13****.** shows the Average Noise Power Reduction Gain in the PRIME protocol for different locations.

### PREFERRED EMBODIMENTS OF THE INVENTION

The invention relates to a novel low complexity noise reduction scheme for OFDM-based power line communication (PLC) systems.

Continuous long period field measurements of PLC noise in the FCC frequency band have been performed at seven locations with different PLC environments.

The analysis of the results has led to identifying a key PLC noise characteristic, used to enable a simple and efficient noise reduction scheme for PLC systems, with a significant noise reduction gain.

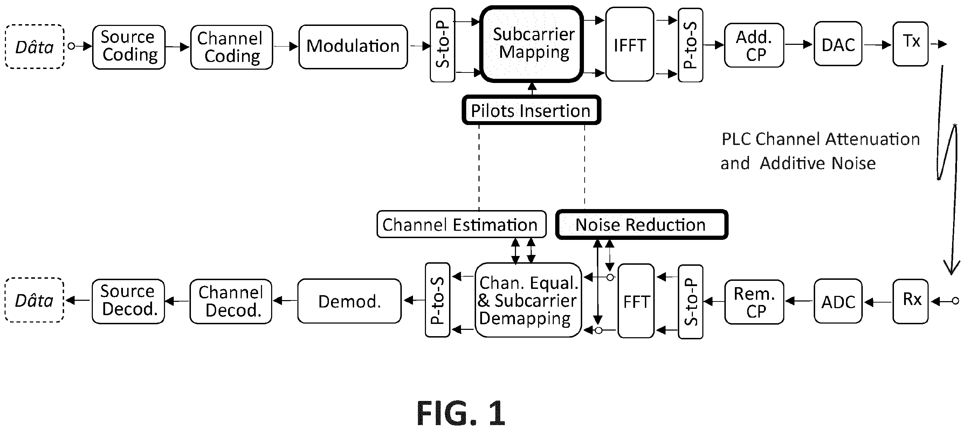

As presented in Fig. 1, a typical OFDM-based PLC system is considered, wherein the different communication blocks in the physical layer are presented. As shown in this figure, the proposed noise reduction scheme is placed after the receiver's FFT block.

The PLC modem was connected directly to the AC mains as close as possible to the electrical meter in locations chosen to have different noise environments (density of customers per transformer station, the distance between households or loads). A computing device directly connected to the PLC model was used to control and store the data.

From field measurements results, a high correlation of noise in PLC was observed. Accordingly, the time correlation characteristics of noise are presented and the noise reduction method for OFDM-based PLC of the invention.

It has been determined, by means of the analysis of long-period measurements, that sub-carrier noise magnitudes and phases are highly time-correlated with adjacent sub-carriers.

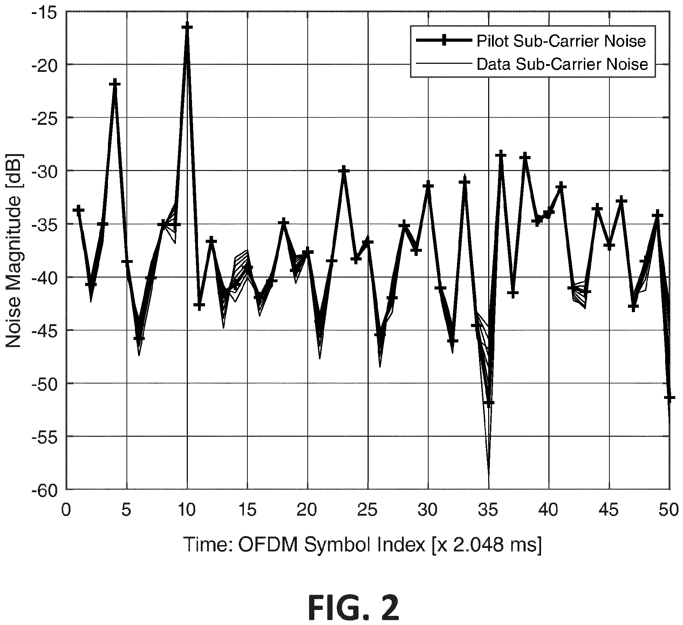

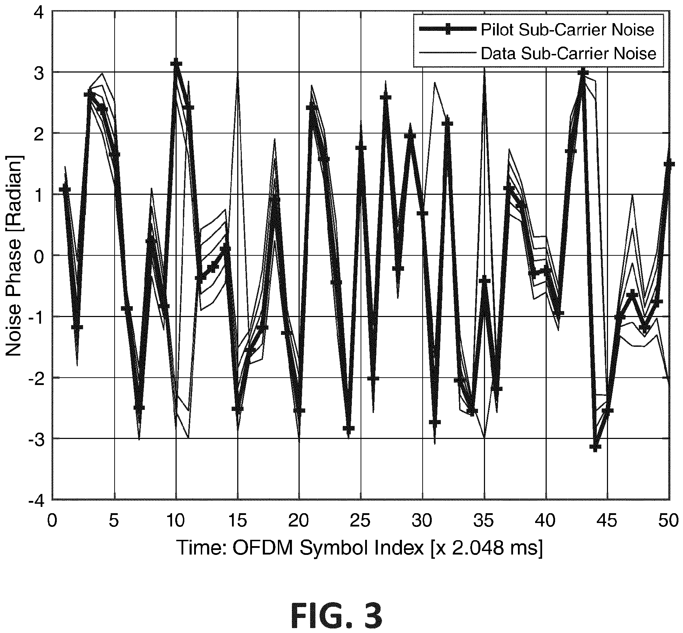

In Figures 2 and 3, respectively, it is shown the noise magnitude and phase variations of a given pilot sub-carrier equal to 1373.3 Hz (base-band frequency) for the band pass signal with center frequency 64.94 kHz and its adjacent 6 sub-carriers. As shown, both variables, are highly positively correlated.

A pilot frequency-domain spacing is defined as the number of sub-carriers (SCs) between two adjacent pilot sub-carriers (NSC), which are equal to the number of SCs associated with a pilot SC.

A time-correlation coefficient between each sub-carrier noise magnitude and phase and its corresponding sub-carrier pilot noise magnitude and phase is evaluated for each pilot frequency-domain spacing.

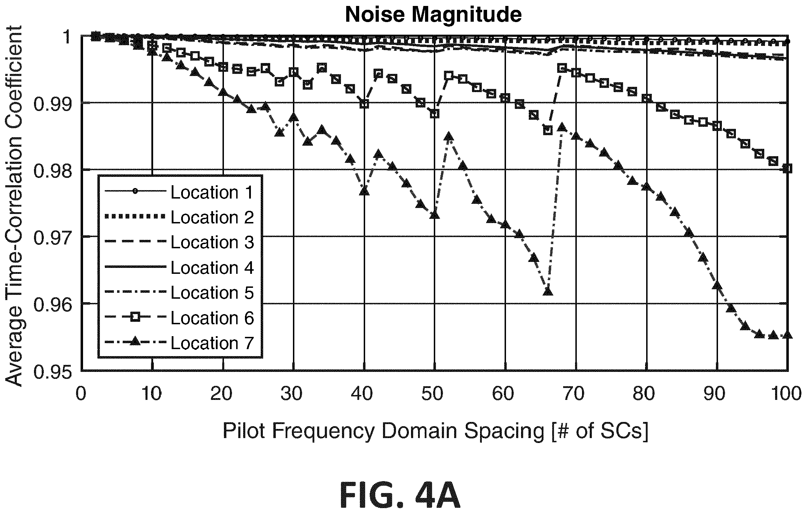

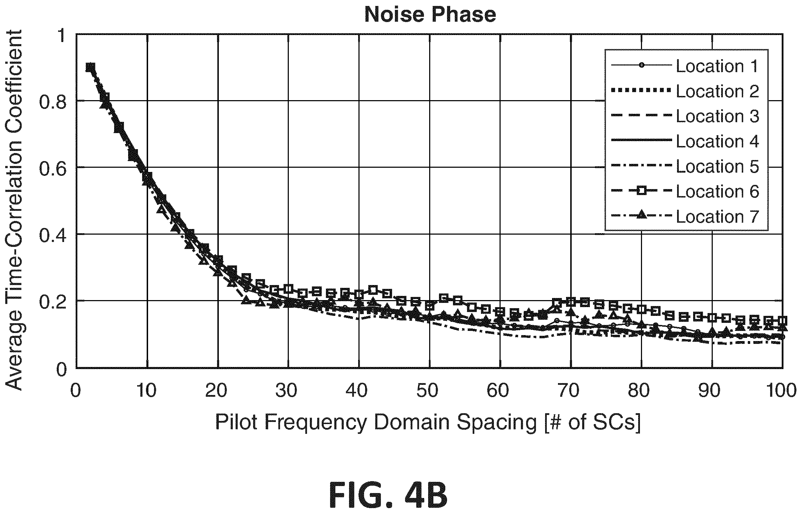

Then, the average of all the SCs time-correlation coefficient for each pilot frequency-domain spacing has been computed and presented in Fig. 4A and Fig. 4B, for 7 different locations. Figure 4A and Figure 4B confirm the high positive time-correlation of the noise magnitude, e.g., larger than 0.99 for the different locations.

As expected, the average time-correlation of the noise phase decreases with the increased pilot frequency-domain spacing, wherein the number of 10 SCs presents the maximum frequency spacing that offers an optimal average time-correlation of the noise phase for all the considered locations.

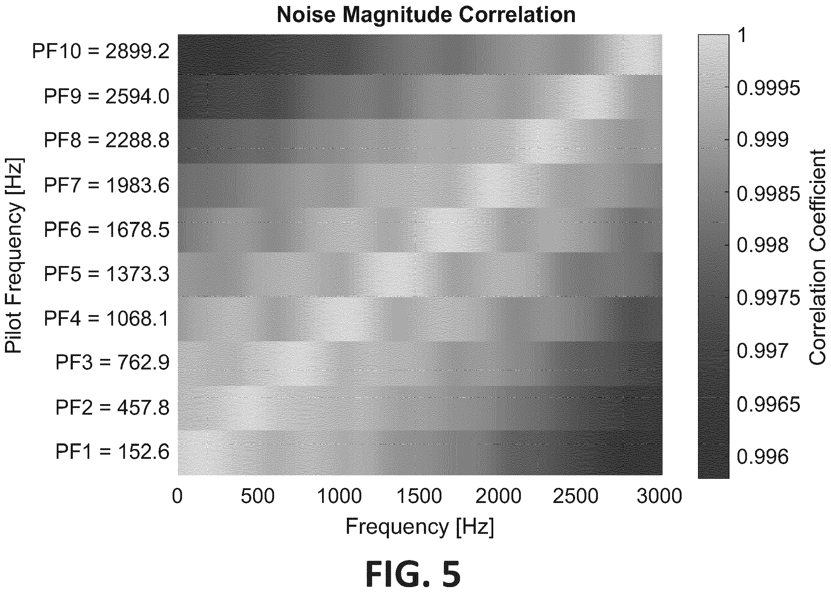

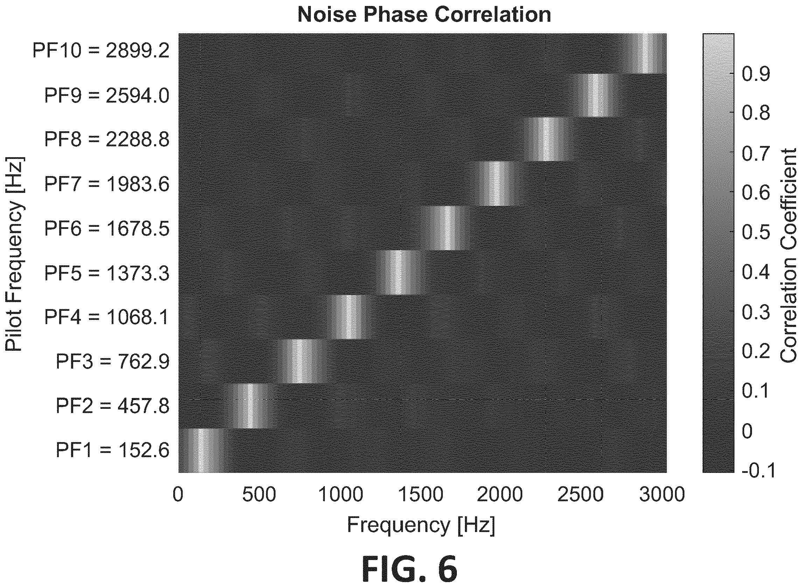

The correlation evaluation results are presented in Figs. 5 and 6, by showing an example of the correlation coefficients between the noise magnitudes and phases, respectively, of ten identified pilot sub-carriers and that of the ten associated subcarriers, within the same channel. In this case, the pilot sub-carriers can be used in the proposed scheme to estimate all the sub-carrier noise magnitudes and phases in a given considered channel frequency band.

The noise reduction method of the invention is based on the time-correlation characteristics explained.

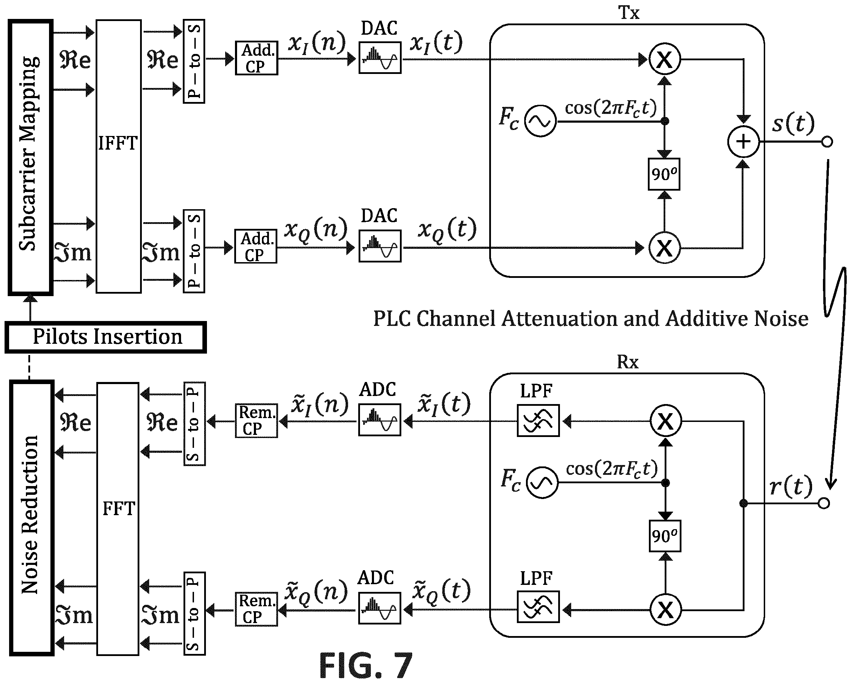

As shown in Fig. 7, the invention's noise reduction method is implemented after the FFT block at the receiver. The method of the invention comprises a step of providing pilot resource elements (REs) related to the pilot sub-carriers, which are identified to detect the noise level of subcarriers and estimate the response of the subcarriers, being the subcarriers related to data resource elements (REs). A resource element is one subcarrier spacing in frequency-domain by one OFDM symbol in time-domain.

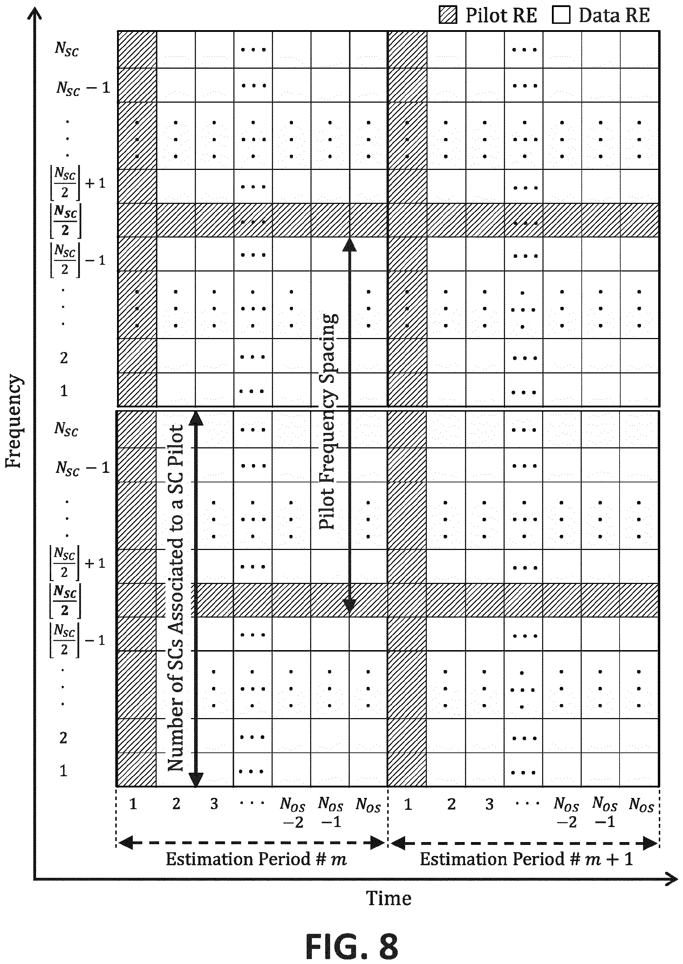

The pilot REs always remain silent to detect the noise estimation's corresponding noise levels at the PLC receiver. For a given channel and a given estimation period, the mapping of the data REs and pilot REs are designed as presented in Figure 8. Pilot REs are allocated to all the sub-carriers of the first OFDM symbol during an estimation period, and to the sub-carrier at the middle of the channel bandwidth for all the OFDM symbols.

Data resource elements (REs) are provided in all subcarriers and OFDM symbols without a pilot RE, and the modulated data symbols are allocated to said data resource elements.

Then, using the identified pilot resource elements, the noise magnitude and phase is estimated by using the expressions: $‖ {\hat{n}}_{k . i} ‖ = {α}_{k} ‖ {\hat{n}}_{k . i - 1} ‖ + {β}_{k} \left(‖ {n}_{p , i} ‖-‖ {n}_{p , i - 1} ‖\right) + {λ}_{k}$ $φ \left({\hat{n}}_{k . i}\right) = α {′}_{k} φ \left({\hat{n}}_{k . i - 1}\right) + β {′}_{k} \left(φ\left({n}_{p , i}\right)-φ\left({n}_{p , i - 1}\right)\right) + λ {′}_{k}$ wherein, ∥*n̂*_{*k*.*i*}∥ and *ϕ*(*n̂_{k.i}*) are, respectively, the estimation of the noise magnitude and phase at data subcarrier *k,* and OFDM symbol *i,* ∥*n_{p.i}*∥ and *ϕ*(*n*_{*p*.*i*}) are, respectively, the noise magnitude and phase at pilot subcarrier p, and OFDM symbol *i,* being $p = ⌊ {N}_{sc} / 2 ⌋$, where *N_{sc}* is the number of subcarriers associated to a pilot subcarrier, *k* being the variable representing subcarriers from 1 to *N_{SC}*, and *i* being the variable representing the current OFDM symbol from 1 to *N_{OS},* wherein *N_{OS}* is the total amount of OFDM symbols, and *αₖ, α'ₖ*, *βₖ, β'ₖ, λₖ* and *λ'ₖ* being optimization parameters.

Then, a corrected value of OFDM symbols is calculated by applying the expression: ${{y}_{k , l}}^{˜} = {y}_{k , i} - ‖ {\hat{n}}_{k . i} ‖ exp \left(j φ\left({\hat{n}}_{k . i}\right)\right)$ wherein, *y_{k,i}* is the received value of OFDM symbol at subcarrier *k*, and the OFDM symbol *i*.

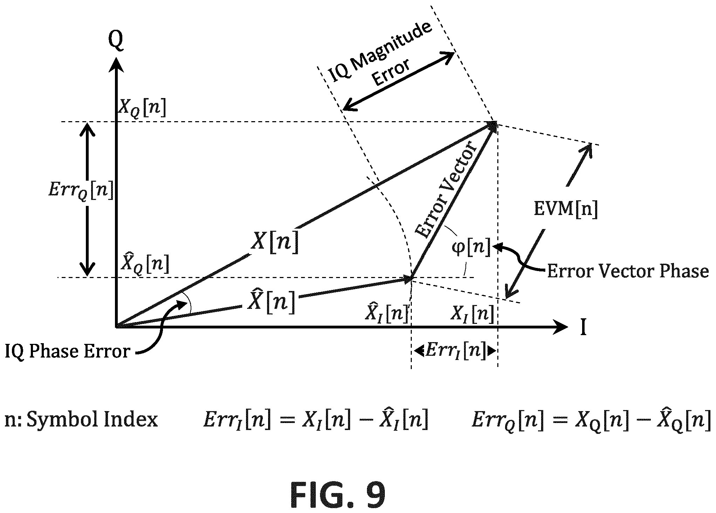

The proposed noise reduction scheme for a general PLC system is evaluated in terms of normalized mean square error (NMSE). The estimator evaluation metric NMSE is defined as the ratio between the average of the squared error vector magnitudes (EVMs) and the average of the actual values. In general, an error vector at symbol index n is a vector in the I-Q plane between an actual complex sample *X*[*n*] and its estimate *X̂*[*n*], as presented in Fig. 9, such that: $EVM \left[n\right] = \left|X\left[n\right]-\hat{X}\left[n\right]\right|$

Accordingly, the NMSE is expressed as: $NMSE = \frac{\frac{1}{N} {\sum }_{n = 1}^{N} {\left|X\left[n\right]-\hat{X}\left[n\right]\right|}^{2}}{\frac{1}{N} {\sum }_{n = 1}^{N} {\left|X\left[n\right]\right|}^{2}} = \frac{{\sum }_{n = 1}^{N} \left|{Err}_{I}{\left[n\right]}^{2}-{Err}_{Q}{\left[n\right]}^{2}\right|}{{\sum }_{n = 1}^{N} \left|{X}_{I}{\left[n\right]}^{2}-{X}_{Q}{\left[n\right]}^{2}\right|}$ wherein, *X*[*n*] = *X_{R}*[*n*] + *i X_{I}*[*n*] is a given noise complex value, with *X_{R}*[*n*] and *X_{I}*[*n*] being the corresponding real and imaginary parts, and *X̂*[*n*] = *X̂_{R}*[*n*] + *i X̂_{I}*[*n*] its estimated value. *Err_{R}*[*n*] = *X_{R}*[*n*] - *X̂_{R}*[*n*] and *Err_{I}*[*n*] = *X_{I}*[*n*] - *X̂_{I}*[*n*].

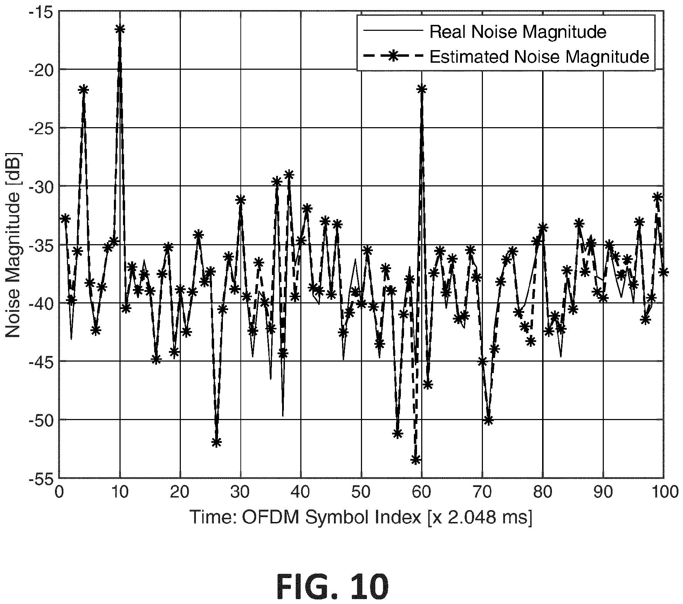

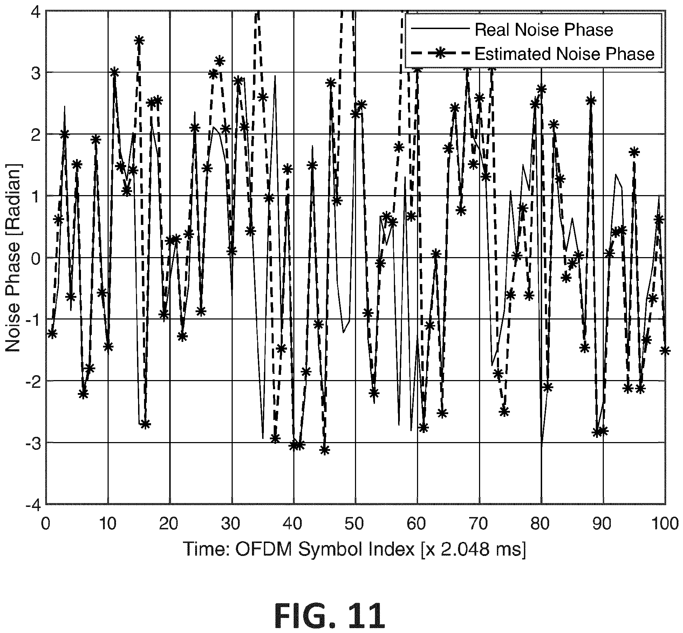

Figures 10 and 11 show the variations of the noise magnitude and phase, respectively, with the corresponding estimations, for example, sub-carrier, with a frequency equal to 42 kHz. As shown in these figures, the estimated noise level variation is very similar to that of the real noise level, especially for the noise magnitude. As expected, the noise magnitude presents a very high positive time-correlation between the subcarriers within the same frequency narrowband compared to the variation of the corresponding noise phase variations.

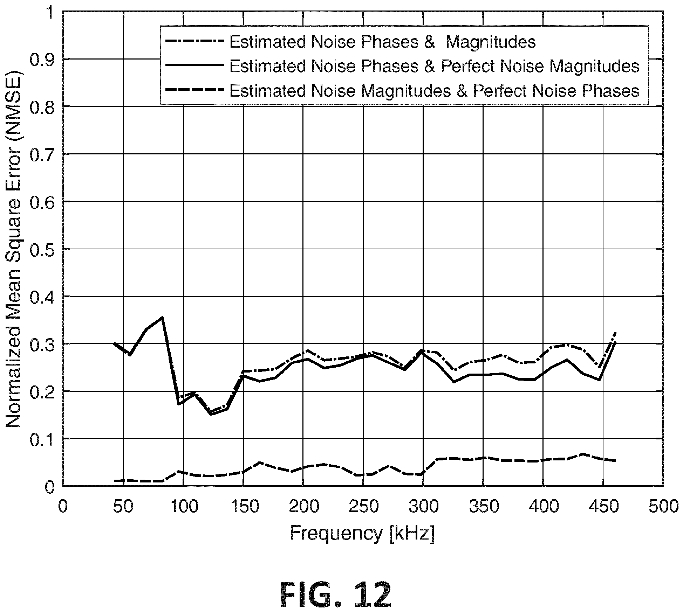

Furthermore, to evaluate the proposed method's accuracy, Figure 12 shows the NMSE per a sub-carrier within the considered frequency band from 42 kHz to 471 kHz. Figure 12 shows that the proposed method presents a good NMSE for the different sub-carriers in the considered example of frequency-band, which confirms the accuracy of the proposed noise reduction method that can be enhanced by adequately tuning the optimization parameters of Equations 1 and 2.

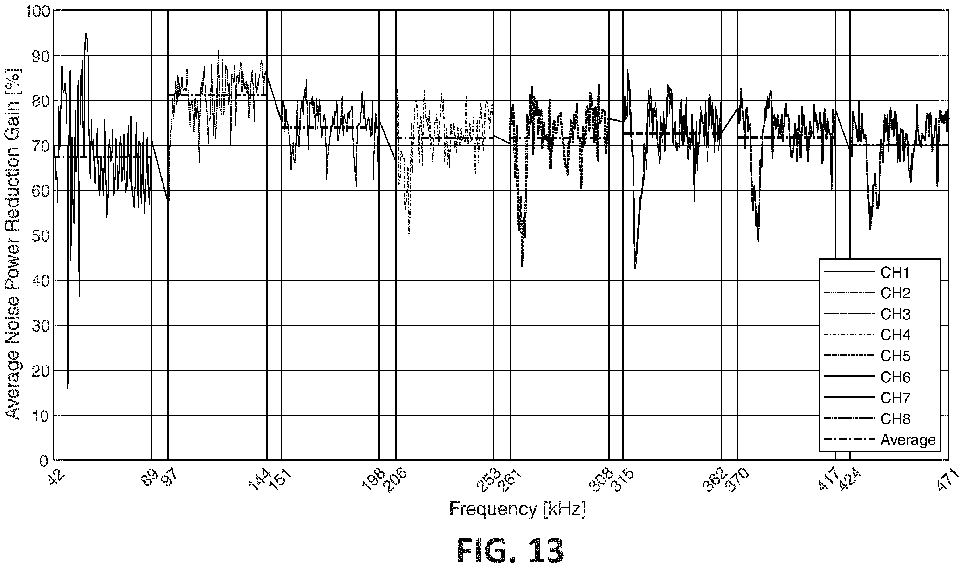

It is also stated the advantage of using the method of the invention within the well-used PoweRline Intelligent Metering Evolution (PRIME) protocol version 1.4 based PLC system. The PRIME protocol is a field-proven, mature protocol with millions of devices deployed by many utilities worldwide. For that, a simulator setup is introduced, wherein the results are based on the NB-PLC noise field measurements and a PLC simulator, which executed PRIME-based Monte Carlo simulations to evaluate the proposed method's performance. The PRIME protocol divides the FCC spectrum into eight channels with 97 equally spaced sub-carriers as detailed in Fig. 13. The inputs of the simulator are presented in TABLE I.

**Table I.**

| Parameter | Value |
|---|---|
| N_{SC} | 97 |
| n_{k,s} | Field Measurements |
| a₀ | 0 |
| a₁ | 7.8 10⁻¹⁰ |
| a₂ | 1 |
| vₚ | 1.5 10⁸ m/s |
| Modulation | BPSK, DQPSK, and D8PSK |
| P_{T} | 90 dBuV |

Other locations different from the specific locations selected for this example could provide different results, but maintaining the same principle, that the high positive time-correlation between the sub-carrier's noise magnitudes and phases.

## Claims

1. A method for noise reduction in power Line Communications (PLC) comprising the steps of:
- providing at least one pilot subcarrier and at least a set of subcarriers associated with the pilot subcarrier;
- providing a pilot resource element (RE), being a subcarrier spacing in frequency-domain by one OFDM symbol in time-domain, which remains silent for detecting the complex values of the PLC noise at this pilot RE;
- allocating the pilot RE to all subcarriers of the first OFDM symbol during an estimation period,
- allocating the pilot RE to the subcarrier at the middle of a channel bandwidth for all OFDM symbols;
- providing data resource elements (REs), being all the REs not allocated to the predefined pilot REs;
- allocating modulated data symbols to data resource elements;
- estimating the noise magnitude and phase of each pilot resource element (RE) using the expressions: $‖ {\hat{n}}_{k . i} ‖ = {α}_{k} ‖ {\hat{n}}_{k . i - 1} ‖ + {β}_{k} \left(‖ {n}_{p , i} ‖-‖ {n}_{p , i - 1} ‖\right) + {λ}_{k}$ $φ \left({\hat{n}}_{k . i}\right) = α {′}_{k} φ \left({\hat{n}}_{k . i - 1}\right) + β {′}_{k} \left(φ\left({n}_{p , i}\right)-φ\left({n}_{p , i - 1}\right)\right) + λ {′}_{k}$ wherein, ∥*n̂*_{*k*.*i*}∥ and *ϕ*(*n̂_{k.i}*) are, respectively, the estimation of the noise magnitude and phase at data subcarrier *k,* and OFDM symbol *i,* ∥*n*_{*p*.*i*}∥ and *ϕ*(*n_{p.i}*) are, respectively, the noise magnitude and phase at pilot subcarrier *p*, and OFDM symbol *i,* being $p = ⌊ {N}_{sc} / 2 ⌋$, where *N_{sc}* is the number of subcarriers associated with a pilot subcarrier, *k* being the variable representing subcarriers from 1 to *N_{SC},* and *i* being the variable representing the current OFDM symbol from 1 to *N_{OS},* wherein *N_{OS}* is the total amount of OFDM symbols, and *αₖ, α'ₖ*, *βₖ, β'ₖ, λₖ* and *λ'ₖ* being optimization parameters; and
- filtering the received data at each data resource element (RE) by applying the expression: ${{y}_{k , ι}}^{˜} = {y}_{k , i} - ‖ {\hat{n}}_{k . i} ‖ exp \left(j φ\left({\hat{n}}_{k . i}\right)\right)$ wherein, *y_{k,i}* is the received value of OFDM symbol at subcarrier *k,* and the OFDM symbol *i*.

2. The method according to claim 1, wherein the noise reduction method is performed on the receiver of the PLC system, after FFT block.

3. A computer program adapted to perform the steps of the method of any of claims 1 to 2.

4. A computer readable storage medium comprising the computer program of claim 3.

## Patentansprüche

1. Verfahren zur Rauschreduzierung in einer Stromleitungskommunikation (PLC), das die folgenden Schritte umfasst:
- Bereitstellen von mindestens einem Pilotunterträger und mindestens einem Satz von Unterträgern, die mit dem Pilotunterträger verknüpft sind;
- Bereitstellen eines Pilotressourcenelements (RE), bei dem es sich um einen Unterträgerabstand in einer Frequenzdomäne handelt, durch ein OFDM-Symbol in einer Zeitdomäne, das zum Detektieren der komplexen Werte des PLC-Rauschens an diesem Pilot-RE still bleibt;
- Zuteilen des Pilot-RE zu allen Unterträgern des ersten OFDM-Symbols während einer Schätzperiode,
- Zuteilen des Pilot-RE zum Unterträger in der Mitte der Kanalbandbreite für alle OFDM-Symbole;
- Bereitstellen von Datenressourcenelementen (REs), bei denen es sich um alle REs handelt, die den vordefinierten Pilot-REs nicht zugeteilt sind;
- Zuteilen von modulierten Datensymbolen zu Datenressourcenelementen;
- Schätzen des Rauschausmaßes und der Phase von jedem Pilotressourcenelement (RE) unter Verwendung der folgenden Ausdrücke: $‖ {\hat{n}}_{k . i} ‖ = {α}_{k} ‖ {\hat{n}}_{k . i - 1} ‖ + {β}_{k} \left(‖ {n}_{p , i} ‖-‖ {n}_{p , i - 1} ‖\right) + {λ}_{k}$ $φ \left({\hat{n}}_{k . i}\right) = α {′}_{k} φ \left({\hat{n}}_{k . i - 1}\right) + β {′}_{k} \left(φ\left({n}_{p , i}\right)-φ\left({n}_{p , i - 1}\right)\right) + λ {′}_{k}$ wobei ∥*n̂*_{*k*.*i*}∥ und *ϕ*(*n̂_{k.i}*) die Schätzung des Rauschmaßes bzw. die Phase am Datenunterträger *k* und OFDM-Symbol *i* sind, ∥*n*_{*p*.*i*}∥ und *ϕ*(*n*_{*p*.*i*}) das Rauschmaß bzw. die Phase am Pilotunterträger p und OFDM-Symbol *i* sind, wobei p = [*N_{sc}*/2], wo *N_{sc}* die Anzahl von Unterträgern ist, die mit einem Pilotunterträger verknüpft sind, wobei *k* die Variable ist, die Unterträger von 1 bis *N_{SC}* repräsentiert, und wobei *i* die Variable ist, die das aktuelle OFDM-Symbol von 1 bis Nos repräsentiert, wobei *N_{OS}* die Gesamtmenge von OFDM-Symbolen ist und wobei *αₖ, α'ₖ*, *βₖ, β'ₖ, λₖ* und *λ'ₖ* Optimierungsparameter sind; und
- Filtern der empfangenen Daten an jedem Datenressourcenelement (RE) durch Anwenden des folgenden Ausdrucks: ${{y}_{k , ι}}^{˜} = {y}_{k , i} - ‖ {\hat{n}}_{k . i} ‖ exp \left(j f\left({\hat{n}}_{k . i}\right)\right)$ wobei y_{k,i} der empfangene Wert eines OFDM-Symbol am Unterträger k ist und das OFDM-Symbol i.

2. Verfahren nach Anspruch 1, wobei das Rauschreduzierungsverfahren am Empfänger des PLC-Systems hinter FFT-Block durchgeführt wird.

3. Computerprogramm, das angepasst ist, die Schritte des Verfahrens von einem der Ansprüche 1 bis 2 durchzuführen.

4. Computerlesbares Speichermedium, das das Computerprogramm von Anspruch 3 umfasst.

## Revendications

1. Procédé de réduction de bruit dans les communications par ligne électrique (PLC), comprenant les étapes consistant en :
- la fourniture d'au moins une sous-porteuse pilote et d'au moins un ensemble de sous-porteuses associées à la sous-porteuse pilote ;
- la fourniture d'un élément de ressource (ER) pilote, un espacement de sous-porteuse étant en domaine fréquence par un symbole OFDM en domaine temporel, qui reste silencieux pour la détection des valeurs complexes du bruit PLC au niveau de cet ER pilote ;
- l'attribution de l'ER pilote à toutes les sous-porteuses du premier symbole OFDM pendant une période d'estimation,
- l'attribution de l'ER pilote à la sous-porteuse au milieu d'une bande passante de canal pour tous les symboles OFDM ;
- la fourniture d'éléments de ressources (ER) de données, tous les ER n'étant pas attribués aux ER pilotes prédéfinis ;
- l'attribution de symboles de données modulés à des éléments de ressources de données ;
- l'estimation de l'amplitude et de la phase de bruit de chaque élément de ressource (ER) pilote à l'aide des expressions : $‖ {\hat{n}}_{k . i} ‖ = {α}_{k} ‖ {\hat{n}}_{k . i - 1} ‖ + {β}_{k} \left(‖ {n}_{p , i} ‖-‖ {n}_{p , i - 1} ‖\right) + {λ}_{k}$ $φ \left({\hat{n}}_{k . i}\right) = α {′}_{k} φ \left({\hat{n}}_{k . i - 1}\right) + β {′}_{k} \left(φ\left({n}_{p , i}\right)-φ\left({n}_{p , i - 1}\right)\right) + λ {′}_{k}$ dans lequel, ∥*n̂*_{*k*.*i*}∥ et *ϕ*(*n̂_{k.i}*) sont, respectivement, l'estimation de l'amplitude et de la phase de bruit au niveau d'une sous-porteuse de données *k*, et d'un symbole OFDM *i,* ∥*n̂*_{*p*.*i*}∥ et *ϕ*(*n*_{*p*.*i*}) sont, respectivement, l'amplitude et la phase de bruit au niveau d'une sous-porteuse pilote *p*, et d'un symbole OFDM *i*, étant *p* = [*N_{sc}*/2], où *N_{sc}* est le nombre de sous-porteuses associées à une sous-porteuse pilote, *k* étant la variable représentant les sous-porteuses de 1 à *N_{SC}*, et *i* étant la variable représentant le symbole OFDM actuel de 1 à Nos, dans lequel *N_{OS}* est la quantité totale de symboles OFDM, et *αₖ, α'ₖ*, *βₖ, β'ₖ, λₖ* et *λ'ₖ* étant des paramètres d'optimisation ; et
- le filtrage des données reçues au niveau de chaque élément de ressource (ER) de données en appliquant l'expression : ${{y}_{k , ι}}^{˜} = {y}_{k , i} - ‖ {\hat{n}}_{k . i} ‖ exp \left(j φ\left({\hat{n}}_{k . i}\right)\right)$ dans lequel, *y_{k,i}* est la valeur reçue d'un symbole OFDM au niveau d'une sous-porteuse *k*, et du symbole OFDM *i*.

2. Procédé selon la revendication 1, dans lequel le procédé de réduction de bruit est effectué sur le récepteur du système PLC, après le bloc FFT.

3. Programme informatique adapté pour effectuer les étapes du procédé selon l'une quelconque des revendications 1 à 2.

4. Support de stockage lisible par ordinateur comprenant le programme informatique selon la revendication 3.
